# EUROPEAN PATENT APPLICATION

(11) **EP 4 696 445 A1**
(43) Date of publication of application: **18.02.2026**
(21) Application number: 24788672.4
(22) Date of filing: 05.04.2024
(51) Int. Cl.: B23K 20/12

(54) **FRICTION JOINING DEVICE AND FRICTION JOINING METHOD**

(30) Priority: 10.04.2023 JP 2023063433
(71) Applicant: Citizen Machinery Co., Ltd., Nagano 389-0206 (JP)
(72) Inventor: SHIMIZU, Katsuki, Kitasaku-gun, Nagano 389-0206 (JP)
(74) Representative: Ribeiro, James Michael
(86) International application number: PCT/JP2024/014089
(87) International publication number: WO 2024/214648

(57) **Abstract**

Provided is a technique capable of suppressing occurrence of failure in friction welding and improving accuracy of quality determination of a joint state. Provided is a friction welding device that joins a first workpiece and a second workpiece by bringing the first workpiece and the second workpiece into contact with each other in a state in which the workpieces are rotated relative to each other, wherein, in a first friction heating period that is a predetermined period immediately after the first workpiece and the second workpiece come in contact with each other, an electric current that flows to a first drive source of a first drive mechanism that moves a first spindle for gripping the first workpiece in the axial direction, and a second drive source of a second drive mechanism that moves a second spindle that grips the second workpiece in the axial direction is limited to a first limit value or less that is smaller than a second limit value for limiting the electric current flowing to the first drive source and the second drive source in a second friction heating period after the first friction heating period has elapse.

## Description

### [Technical Field]

The present invention relates to a friction joining device which joins two workpieces by friction.

### [Background Art]

To utilize the remaining material of a workpiece used for a machine tool, e.g., automatic lathe device, the remaining material often has been joined with a new workpiece by friction (see PTL 1). In other words, a remaining bar material, which reached a length from which a workpiece can no longer be cut, is joined with a newly supplied bar material by friction, so as to be used as a next machining material, whereby material cost and environmental impact can be reduced.

Friction joining is integral joining of two workpieces by softening the sliding portions of the two workpieces by using frictional heat generated therebetween, and stopping the relative rotation of the sliding portions while applying pressure so as to join the sliding portions. Specifically, a first workpiece (a new bar material used for a next step) gripped by a spindle (first spindle) and a second workpiece (a remaining material remaining from a previous step) gripped by a rear face spindle (second spindle) are relatively rotated. Then opposing end faces of the first workpiece and the second workpiece are contacted with each other by decreasing the distance between the spindles in the axial direction, so that frictional heat is generated in the sliding portions. Once the joined portion is sufficiently softened by friction, the relative rotation between the spindles is stopped while maintaining the applied pressure. When the heat dissipates by the stop of rotation, the sliding portions solidify in the joined state, and the remaining material and the new material are integrally joined thereby.

On a drive mechanism for driving the spindles, a large torque load is generated when the workpieces rotating at high speed come in contact with each other. This large torque load may become a cause of various failures in joining the workpieces and device disorders. For example, the remaining material, i.e., the workpiece on the rear face spindle side, which has to be stopped in the relative rotation of the workpieces, starts to rotate following the rotation of the workpiece on the front face spindle side, and the remaining material and a clamp chuck gripping this remaining material may be burnt and damage the clamp chuck.

PTL 2 discloses a method for monitoring whether effective power supplied from an external power supply to a system power supply is within a tolerance of a predetermined numeric value range that is set for each step, and for determining thereby whether an abnormality occurred and whether the joining state of the joined portions is good or bad. In particular, in the later half period of the step from the melting of the joined portion to the stoppage of the rotation, the quality of the joint state is determined based on a difference signal generated by calculating the difference of the moving averages of output values of the effective power. However in some cases, it is difficult to detect the above mentioned occurrence of failure, even if the power values are monitored in this way.

### [Citation List]

### [Patent Literature]

[PTL 1] Japanese Patent Application Publication No. 2000-202648
[PTL 2] Japanese Patent Application Publication No. 2009-082951

### [Summary of Invention]

### [Technical Problem]

It is an object of the present invention to provide a technique capable of suppressing the occurrence of failure in friction joining, and improving the accuracy of a quality determination of a joined state.

### [Solution to Problem]

To achieve the above object, a friction joining device of the present invention is a friction joining device that includes:
a first spindle which grips a first workpiece;
a second spindle which grips a second workpiece so as to face the first workpiece in an axial direction;
a first drive mechanism which includes a first drive source and is configured to move the first spindle in the axial direction by using a drive force of the first drive source;
a second drive mechanism which includes a second drive source and is configured to move the second spindle in the axial direction by using a drive force of the second drive source;
a rotational drive mechanism configured to relatively rotate the first workpiece and the second workpiece around a rotation axis line along the axial direction;
control means for controlling the first drive mechanism, the second mechanism and the rotational drive mechanism so that the first workpiece and the second workpiece are joined by contacting with each other in a state where the first workpiece and the second workpiece are relatively rotated; and
current limiting means for limiting current flowing to the first drive source and the second drive source to predetermined limit values or less, wherein
in a first friction heating period that is a predetermine period immediately after the first workpiece and the second workpiece come in contact with each other, the current limiting means limits the current that flows to the first drive source and the second drive source to a first limit value or less that is smaller than a second limit value for limiting the current flowing to the first drive source and the second drive source in a second friction heating period after the first friction heating period has elapsed.

### [Advantageous Effects of Invention]

According to the present invention, the occurrence of failure in friction joining can be suppressed, and the accuracy of a quality determination of a joined state can be improved.

### [Brief Description of Drawings]

[Fig. 1]

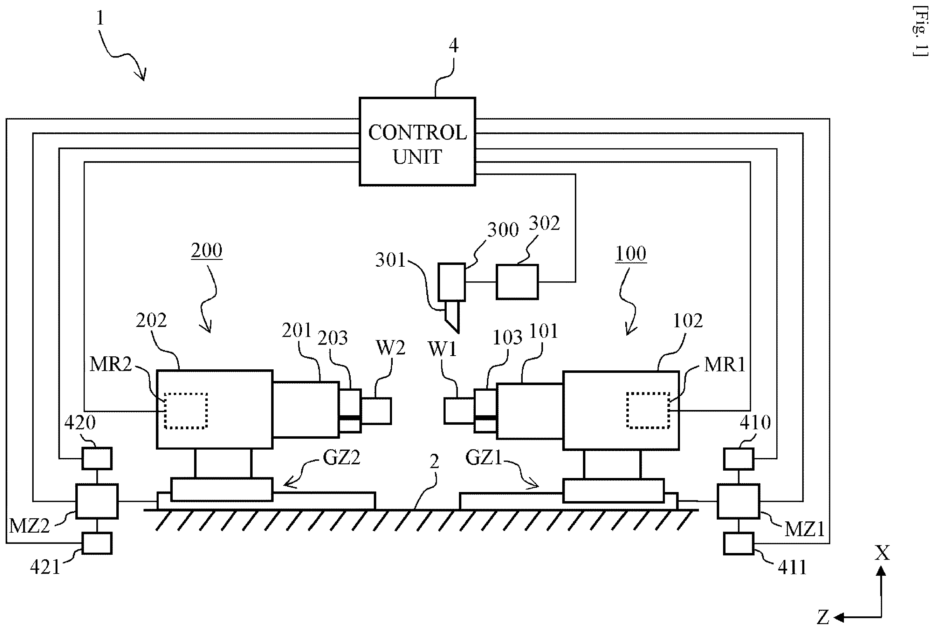

   Fig. 1 is a diagram for describing a configuration of a friction joining device according to an embodiment of the present invention.
[Fig. 2]

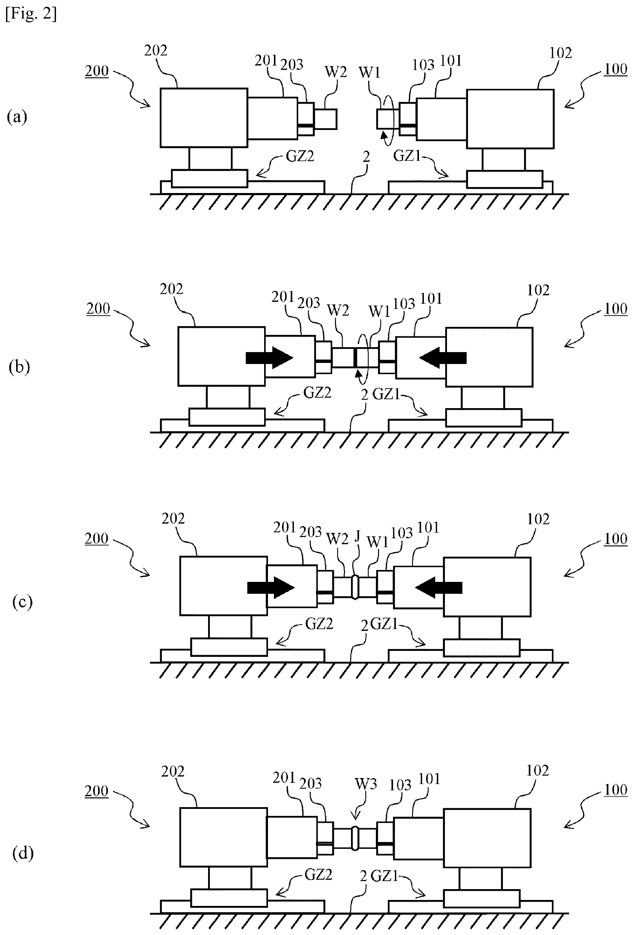

   Fig. 2 is a diagram for describing the friction joining operation of a friction joining device according to an embodiment of the present invention.
[Fig. 3]

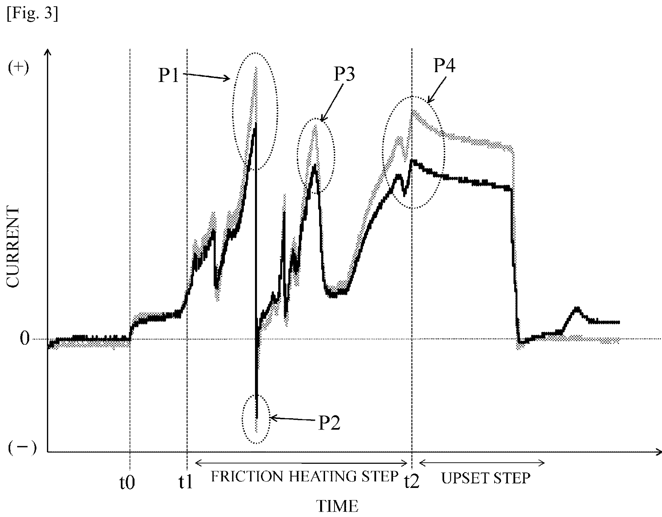

   Fig. 3 is a time chart indicating a temporal change of load during a friction joining operation when a failure occurred.
[Fig. 4]

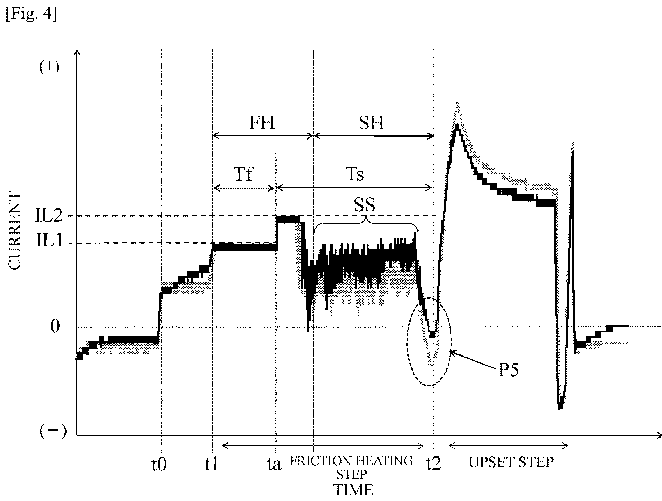

   Fig. 4 is a time chart indicating a temporal change of load during a friction joining operation according to an embodiment of the present invention.
[Fig. 5]

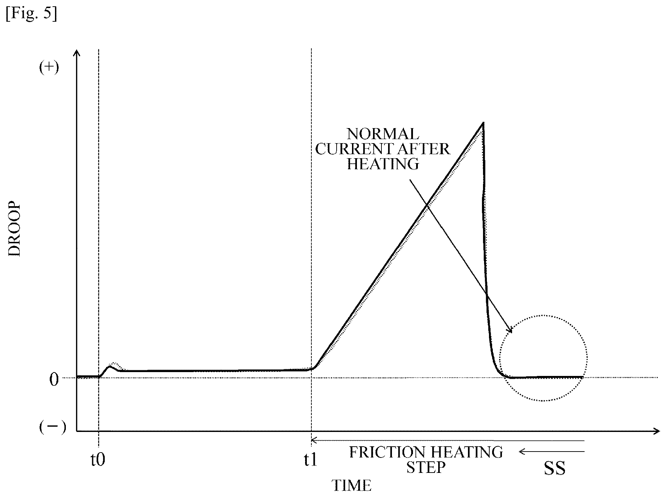

   Fig. 5 is a time chart indicating a droop with respect to a relative position of the spindles corresponding to Fig. 4.
[Fig. 6]

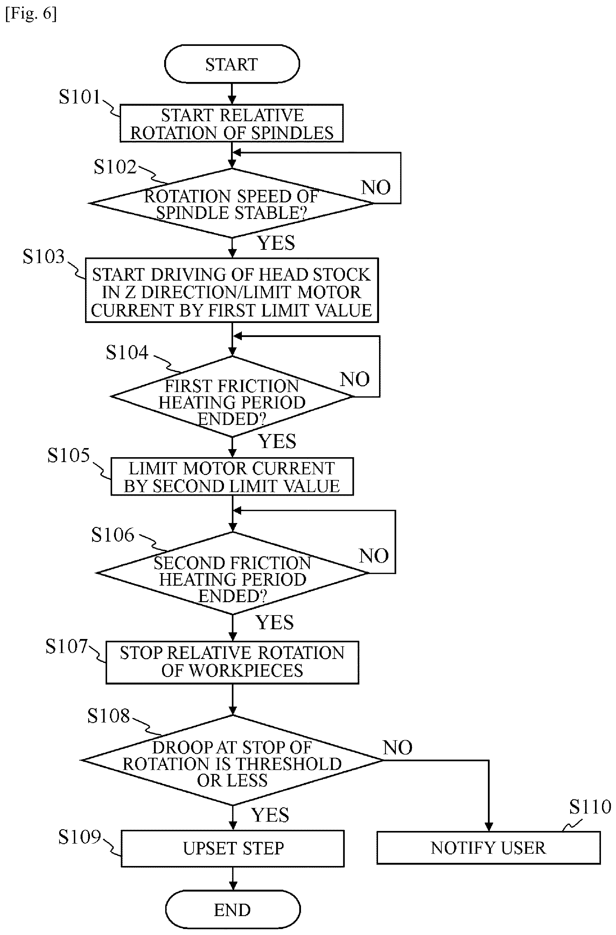

   Fig. 6 is a flow chart of the friction joining steps according to an embodiment of the present invention.

### [Description of Embodiments]

Preferred embodiments of the present invention will be described with reference to the drawings. The embodiments to be described below, however, are merely preferred configurations of the present invention, and are not intended to limit the scope of the invention by these configurations. Further, the hardware configuration, software configuration and manufacturing conditions of the device, and the functions, materials, shapes, relative positions and the like of the components to be described below are not intended to limit the scope of the invention, unless otherwise specified. A same composing element is denoted with a same reference number as a rule, and redundant description thereof will be omitted.

### (Embodiment)

Fig. 1 is a schematic diagram depicting a configuration of a machine tool 1, which is a friction joining device according to an embodiment of the present invention. The machine tool 1 illustrated in Fig. 1 is an automatic lathe device, which rotates a workpiece W (e.g. long bar material) to be processed, and performs cutting process (turning process) by applying a cutting tool (machining tool) to the workpiece W. The machine tool 1 according to the present embodiment can also be used as the friction joining device which is configured in such a way that when the processed workpiece is cut out of a single workpiece W to the limit, the workpiece W2 (the remaining material thereof) can also be used as a friction joining device to join the newly supplied workpiece W1.

The machine tool 1 includes a first spindle mechanism (front face spindle mechanism) 100 and a second spindle mechanism (rear face spindle mechanism) 200 which face each other on a base (not illustrated), and a tool rest (not illustrated). The first spindle mechanism 100 includes a first spindle (front face spindle) 101, and a second spindle mechanism 200 includes a second spindle (rear face spindle) 201, and these two spindles are disposed such that the respective axial lines are approximately concentric or parallel with each other. Here it is assumed that the axial line direction is the Z axis direction, a direction, that is perpendicular to the axial line direction and parallel with the vertical direction, is the X axis direction, and a direction parallel with the horizontal direction is the Y axis direction. Fig. 1 is a schematic plan view when the configuration of the machine tool 1 is viewed in the Y axis direction.

The first spindle mechanism 100 includes a first drive mechanism GZ1 to move a first head stock 102 (which rotatably supports a first spindle 101) on a base in the Z axis direction. The first drive mechanism GZ is a ball screw drive mechanism constituted of a first motor MZ1 (servo motor) used as a first drive source, a ball screw, a guide rail, and the like. By rotationally driving the ball screw drive mechanism using the first motor MZ1, the first spindle 101, along with the first head stock 102, can be moved in the axial direction (Z axis direction).

The second spindle mechanism 200 as well includes a second drive mechanism GZ2 to move a second head stock 202 (which rotatably supports a second spindle 201) on the base in the Z axis direction. The second drive mechanism GZ2 is a ball screw drive mechanism constituted of a second motor MZ2 used as a second drive source, a ball screw, a guide rail, and the like. By rotationally driving the ball screw drive mechanism using the second motor MZ2, the second spindle 201, along with the second head stock 202, can be moved in the axial direction (Z axis direction).

The mechanism to relatively move the first spindle mechanism 100 and the second spindle mechanism 200 in the Z axis direction (rotation-axis line direction of the spindles) is not limited to a specific configuration, and the above mentioned configuration is merely an example. A drive mechanism to move the first head stock 102 and the second head stock 202, not only in the Z axis direction but also movement in the Y axis direction and the X axis direction, may be included.

As a rotational drive mechanism, the first head stock 102 includes a first built-in motor MR1 (the rotational drive source), for example, so that the first spindle 101 can be rotationally driven by this rotational drive force. In the same way, the second head stock 202 also includes a second built-in motor MR2 (the rotational drive source), so that the second spindle 201 can be rotationally driven by this rotational drive force. In a case of using the machine tool 1 as the friction joining device, which will be described later, in the present embodiment the friction joining step is performed in a state of stopping the second spindle 201 without being rotated. If the first workpiece and the second workpiece can be set in a predetermined relative rotation state in the friction joining, however, the configuration of the friction joining device is not limited to the above configuration. In other words, both the first spindle 101 and the second spindle 201 may be rotated, or the second spindle 201 may be rotated without rotating the first spindle 101. The power source configuration is not limited to the built-in motor, but may be configured to transmit a rotational drive force from an external power source for rotating the spindles.

The first spindle 101 has a hollow structure, including a workpiece holding hole to hold or grip a workpiece W1 (first workpiece), and includes a first chuck 103 and a chuck sleeve (not illustrated) to keep the workpiece W1 in a gripped state (state where the axial center of the workpiece W1 at the first spindle 101 is set, and movement in the axial direction is restricted). The workpiece holding hole is opened toward the second spindle side in the axial line direction, and a part of the workpiece W1, exposed from the opening, is turning-processed by a cutting tool supported by a tool rest (not illustrated). A guide bushing, which is a structure to support the workpiece W1, may be disposed in front of the first spindle 101.

The above mentioned first chuck 103 and the chuck sleeve (not illustrated) are configured such that the chuck sleeve is joined to the first chuck 103, of which movement in the axial direction is limited, from the rear in the axial direction via a tapered surface. The chuck sleeve receives a force from a fluid cylinder (not illustrated) driven by hydraulic pressure, air, or the like, and attempts to move in the axial direction. This applies a force, including a component force in a direction toward the axial center, to the first chuck 103, and generates a clamping force in the chuck, so as to close the slits disposed in the first chuck 103. Thereby a state of gripping the workpiece W1 is provided.

The configuration on the second spindle 201 side includes a second chuck 203 and a chuck sleeve, just like the configuration on the first spindle 101 side, so that a workpiece W2 (second workpiece can be gripped and rotated. The basic configuration is the same as a conventional rear face spindle configuration. In the case where the machine tool 1 is used as the friction joining device, the workpiece W2, gripped by the second spindle 201, is a remaining material of the workpiece gripped by the first spindle 101 after the turning process is performed by a cutting tool 301 of the tool rest 300.

The machine tool 1 includes the tool rest 300, including the cutting tool 301 used for the cutting process, and a drive mechanism 302 to move the tool rest 300. The tool rest 300 and the cutting tool 301 are configured to be movable at least in the cutting direction (X axis direction) and feed direction (Z axis direction) by the drive mechanism 302. In the case where the machine tool 1 is used as the cutting process device, the cutting tool 301 is contacted with a workpiece W in a state of rotating at a predetermined machining rotation speed corresponding to the cutting process, whereby the cutting process is performed on the workpiece W.

Besides the first workpiece W1 gripped by the first spindle 101, a workpiece W to be cutting-processed may be the second workpiece W2 gripped by the second spindle 201 and the third workpiece W3 which was formed by joining the first workpiece W1 and the second workpiece W2 (remaining material) by friction.

For the cutting tool 301, a plurality of cutting tools may be provided in accordance with the type of machining to be performed. In other words, a plurality of cutting tools 301 selected therefrom are provided in the tool rest 300, and one cutting tool 301 is contacted with the workpiece W, whereby the desired cutting process (turning process) can be performed on the workpiece.

The machine tool 1 includes a control unit 4, which is control means for controlling various operations of each component constituting the machine tool 1, such as the spindle mechanisms 100 and 200, the tool rest 300, and the workpiece supply unit (not illustrated). The control unit 4 may be a computer which includes processors (e.g. central processing unit (CPU)) and storage means, e.g., memory.

A first ammeter 410 serving as current detection means is connected to the first motor MZ1 of the first drive mechanism GZ1. The control unit 4 can detect the drive state of the first drive mechanism GZ1, the load state (torque) of the first drive mechanism GZ1 during driving, and the like, based on the current value (first current) of the first motor MZ1 detected by the first ammeter 410.

In the same manner, an ammeter 420 serving as current detection means is connected to the second motor MZ2 of the second drive mechanism GZ2. The control unit 4 can detect a drive state of the second drive mechanism GZ2, the load state (torque) of the second drive mechanism GZ2 during driving, and the like, based on the current value (second current) of the second motor MZ2 detected by the ammeter 420.

Further, a first current limiter (filter circuit) 411 serving as current limiting means is connected to the first motor MZ1 of the first drive mechanism GZ1. The first current limiter 411 is configured to limit the current, that flows to the first motor MZ1, to a predetermined limit value or less. Thereby the torque generated by the first motor MZ1 can be limited to a predetermined torque or less, regardless the operation state of the first drive mechanism GZ1. The first current limiter 411 is configured to variably set the limit value of the current, and in the present embodiment, the control unit 4 changes the limit value of the current by the first current limiter 411 at a predetermined timing in the friction joining step (described later).

In the same manner, a second current limiter (filter circuit) 421 serving as current limiting means is connected to the second motor MZ2 of the second drive mechanism GZ2. The second current limiter 421 is configured to limit the current, that flows to the second motor MZ2, to a predetermined limit value or less. Thereby the torque generated by the second motor MZ2 can be limited to a predetermined torque or less, regardless the operation state of the second drive mechanism GZ2. The second current limiter 421 is configured to variably set the limit value of the current, and in the present embodiment, the control unit 4 changes the limit value of the current by the second current limiter 421 at a predetermined timing in the friction joining step (described later).

Figs. 2(a) to 2(d) are schematic diagrams for depicting the states of the friction joining of the first workpiece W1 and the second workpiece W2 by the machine tool 1 used as the friction joining device according to the present embodiment. Fig. 2(a) is a diagram depicting a state when the first workpiece W1 and the second workpiece W2 starts relative rotation in the friction joining. Fig. 2(b) is a diagram depicting a state of the friction heating (friction heat generation) step in the friction joining. Fig. 2(c) is a diagram depicting a state of the upset pressurization step in the friction joining. Fig. 2(d) is a diagram depicting a state of an end of the upset pressurization step, that is, a state when the first workpiece W1 and the second workpiece W2 are joined, and the third workpiece W3 is generated thereby. In Figs. 2(a) to 2(d), illustration of a part of the configuration in Fig. 1, such as the control unit 4, is omitted.

The machine tool 1 used as the friction joining device softens the sliding portions of the two workpieces W1 and W2 by using the friction heat generated in the sliding portions, and joins the sliding portions by stopping the relative rotation of the sliding portions while applying pressure, so as to integrally join the two workpieces W1 and W2. The workpiece W1, gripped by the first spindle 101, is a new bar material which is provided as the workpiece to be processed in the turning process performed after this friction joining. The workpiece W2 gripped by the second spindle 201, on the other hand, is a remaining bar material generated in the turning process performed before this friction joining step.

First, as illustrated in Fig. 2(a), the first spindle 101 is rotated in a state where the two workpieces W1 and W2 are separated from each other in the rotation axis line direction (Z axis direction). Once this rotation speed is stabilized at a predetermined rotation speed, the first spindle 101 is moved by a predetermined feed amount (moving amount per unit time), so as to approach the second spindle 201 by the first drive mechanism GZ1 in the Z axis direction. At the same time, the second spindle 201 is also moved at a predetermined feed amount, so as to approach the first spindle 101 by the second drive mechanism GZ2 in the Z axis direction.

Then, as illustrated in Fig. 2(b), the relative distance between the first spindle 101 and the second spindle 201 in the Z axis direction is maintained such that the opposing end faces of the first workpiece W1 and the second workpiece W2 are pressed against each other at a predetermined contact pressure, and the first workpiece W1 and the second workpiece W2 slide in this state. In this friction heating step, friction heat is generated at the sliding portions of the first workpiece W1 and the second workpiece W2, whereby the sliding portions are softened.

The relative rotation of the first workpiece W1 and the second workpiece W2 is not limited to the relative rotation performed by stopping the second workpiece W2 and rotating the first workpiece W1 alone. The relative rotation may be performed by stopping the first workpiece W1 and rotating the second workpiece W2 alone. The relative rotation may also be performed by rotating both the first workpiece W1 and the second workpiece W2 in the same direction at mutually different rotation speeds. Further, the relative rotation may be performed by rotating the first workpiece W1 and the second workpiece W2 in opposite directions at mutually different rotation speeds or at the same rotation speeds.

Then as illustrated in Fig. 2(c), the sliding portions are sufficiently softened by the friction, and a high temperature softened portion J is formed between the first workpiece W1 and the second workpiece W2. In this state, the rotation of the first spindle 101 (relative rotation between the spindles) is stopped, while maintaining the pressing between the first workpiece W1 and the second workpiece W2.

The rotation of the first spindle 101 is stopped at a timing when the position command amount (control amount) of the distance of the first head stock 102 and the second head stock 202 in the Z axis direction (relative positions) reaches a command amount, corresponding to a position which is set in advance to stop the rotation of the first spindle 101. For example, the distance of the head stocks 102 and 202 in the Z axis direction may be acquired from the drive amounts of the first drive mechanism GZ1 and the second drive mechanism GZ2 (ball screw drive mechanism), or the positions of the head stocks and spindles in the Z axis direction may be directly detected using a position sensor or the like. In order to form a softened portion J before reaching the rotation stop position, the respective feed amounts (moving amounts in unit time) of the first head stock 102 and the second head stock 202 and the rotation speed of the first spindle 101 (relative rotation speed with respect to the second spindle 201) are acquired by experiment or the like, and are set in advance.

The pressurization between the first workpiece W1 and the second workpiece W2 continues even after the rotation of the first spindle 101 is stopped, in order to push out the burrs of the softened portion J to the periphery, so that the joining state between the first workpiece W1 and the second workpiece W2 become stronger (upset pressurization). In the upset pressurization step (joining step), a pressure higher than the pressure in the friction heating step is applied between the first workpiece W1 and the second workpiece W2, and the feed amounts of the first spindle 101 and the second spindle 201 are controlled so that the pressurized state is maintained for a predetermined time. The feed amounts of the first workpiece W1 and the second workpiece W2 during the upset pressurization is set in advance, considering the approaching margin (the length of the part of the first workpiece W1 and the second workpiece W2 that is released as burrs and shortened by the joining).

As illustrated in Fig. 2(d), the heat at the joined portion is dissipated when rotation is stopped, whereby the joined portion is solidified and the first workpiece W1 and the second workpiece W2 are integrally joined. As a result, the third workpiece W3, which is a one bar material that is constituted of the integration of the remaining material and the new material, is generated. The burrs in the third workpiece W3, generated at the joined portion of the first workpiece W1 and the second workpiece W2, are removed in the cutting process by the cutting tool 301.

Here a large torque is generated on the spindles rotating the workpieces W in the friction joining when the workpieces rotating at high-speed come in contact with each other. If the workpieces come in contact with each other at a certain torque or more, the remaining material (the workpiece on the rear face spindle side), that is stopped in the relative rotation of the workpieces, may start to rotate following the rotation of the workpiece on the front face spindle side, and the remaining material and a clamp chuck gripping this remaining material may be burnt, damaging the clamp chuck.

This failure becomes a problem more easily in the case of performing friction joining using the machine tool (using the machine tool as the friction joining device) as in the present embodiment. In the configuration of gripping the remaining material by the rear spindle using the clamp chuck, that is, in the case of friction-joining hollow metal pipe materials as the workpieces, for example, the workpieces cannot be gripped with a very strong chuck force, due to concerns that the shapes of the workpieces may be affected. In other words, in some cases, limitations may be set on the chuck force of the clamp chuck on the rear face spindle. This may make it difficult to grip the workpieces with sufficient chuck forces, and may cause one workpiece to rotate following the other workpiece, as mentioned above.

Fig. 3 is a time chart indicating a temporal change of loads applied to the first drive mechanism GZ1 and the second drive mechanism GZ2 during a friction-joining operation in a comparative example where the later mentioned motor current limit control of the present invention is not performed. Fig. 3 indicates the time chart when the workpiece started to rotate following the workpiece on the rear spindle side mentioned above, as an example of a joint abnormality. In Fig. 3, the current that flows to the first motor MZ1 of the first drive mechanism GZ1 is indicated by a gray solid line, and the current that flows to the second motor MZ2 of the second drive mechanism GZ2 is indicated by a black solid line.

In Fig. 3, timing t0 indicates a timing when the relative movement of the first spindle 101 and the second spindle 201 is started in the Z axis direction, which corresponds to the state indicated n Fig. 2(a). Timing t1 indicates a timing when the respective opposing end faces of the first workpiece W1 and the second workpiece W2 come in contact, that is, a timing when the friction heating step is started, which corresponds to the state indicated in Fig. 2(b). Timing t2 indicates a timing when the relative rotation of the first workpiece W1 and the second workpiece W2 stops, that is, a timing when the friction heating step ends and the upset process is started. Timings t0 to t2 in Figs. 4 to 6 are also defined in the same manner. Each of these timings is set in advance based on the feed amount that is set for each step.

Here timing t2 is a timing when the states of the machine tool 1 and each workpiece W1 and W2 should be the states indicated in Fig. 2(b) if the processing steps advanced normally without the above mentioned joining abnormality. In the friction heating step of the comparative example, however, the second workpiece W2 rotates following the first workpiece W1, and the melting of the sliding portion between the first workpiece W1 and the second workpiece W2 becomes insufficient, and a sufficient softened portion J has not been formed at timing t2. Further, if the second workpiece W2 rotates following the first workpiece W1 and slides with the second chuck 203, the friction heat is generated in the sliding portion, and depending on the degree of the friction heat, the sliding portion may melt, and the second workpiece W2 and the second chuck 203 may be fused (burnt).

As indicated in Fig. 3, a plurality of peaks P1 to P4 are generated in the current that flows to the motors MZ1 and MZ2, during the friction heating step, that is, during a period from the start of the contact of the workpieces W1 and W2 (timing t1) to the stop of the relative rotation of the workpieces W1 and W2 (timing t2). If the friction heating step advances normally, the current that flows to the motors MZ1 and MZ2 generates a maximum peak immediately after the contact of the workpieces W1 and W2. The current is then gradually stabilized as the heating of the sliding portions of the workpieces W1 and W2 progresses, and drops all at once at timing t2 when the softened portion J is generated, and the rotation of the first spindle 101 is stopped. In other words, each peak P1 to P4 indicated in Fig 3 is an abnormal current peak, which is not generated if the process is progressing normally, and each peak indicates that rotation of the workpiece W1 or W2 following the other workpiece or the generation of burning or the like between the second workpiece W2 and the second chuck 203 occurred.

Fig. 4 is a time chart indicating a temporal change of load applied to the first drive mechanism GZ1 and the second drive mechanism GZ2 during the friction joining operation according to the present embodiment. In Fig. 5, the current that flows to the first motor MZ1 of the first drive mechanism GZ1 is indicated by a gray solid line, and the current that flows to the second motor MZ2 of the second drive mechanism GZ2 is indicated by a black solid line.

In the present embodiment, torque is limited in steps for the first drive mechanism GZ1 and the second drive mechanism GZ2 during the friction heating step, so as to suppress the occurrence of failure to the second spindle 201 (rear spindle) side, such as rotation of a workpiece following the other workpiece, as mentioned above. In other words, the first current limiter 411 limits the upper value of the current that flows to the first motor MZ1 of the first drive mechanism GZ1, and the second current limiter 422 limits the upper value of the current that flows to the second motor MZ2 of the second drive mechanism GZ2 in steps respectively.

Specifically, in the present embodiment, the current limit value IL1 in a predetermined period from the start of the friction heating step (t1 to ta), that is, a predetermined period from the timing when the first workpiece W1 and the second workpiece W2 come in contact, is set to a value smaller than the current limit value IL2 used after a predetermined period.

In the first half period FH of the friction heating step, a large torque load is generated when the first workpiece W1 and the second workpiece W2 come in contact (timing t1), thereafter an unstable state, where the fluctuation width of the torque load is large, continues for a while. In the latter half period SH when the heating of the sliding portions has progressed, the fluctuation width of the torque load is controlled to a certain range (SS portion in Fig. 5), and a relatively stable sliding state continues until the relative rotation of the spindles stops. Therefore the predetermined period (t1 to ta) from the start of the first half period FH is regarded as a first friction heating period Tf, a total the period after the predetermined period in the first half period FH and the latter half period SH is regarded as a second friction heating period Ts, and the torque limit in the first friction heating period Tf is set to be more strict than the torque limit in the second friction heating period Ts.

The current limit value IL1 (first limit value) of the motor in the first friction heating period Tf is set to be suppressed to a level at which the workpiece does not rotate following the other workpiece by the torque load, as mentioned above. The current limit value IL1 may be set to a value similar to the peak value of the torque load fluctuation portion (SS portion) in the latter half period SH. In the present embodiment, the current limit values IL1 of the first motor MZ1 and the second motor MZ2 in the first friction heating period Tf are set to 15% of the respective maximum rated current respectively.

The current limit value IL2 (second limit value) of the motor in the second friction heating period Ts is set to a value that is larger than the current limit value IL1 in the first friction heating period Tf, such that the excessive torque load is suppressed but the friction heating of the workpiece sliding portion progresses efficiently. The current limit value IL2 may be set to a value similar to the value with which the peak value of the torque load fluctuation portion (SS portion) in the latter half period SH does not reach the limit. In the present embodiment, the current limit values IL2 of the first motor MZ1 and the second motor MZ2 in the second friction heating period Ts are set to 20% of the respective maximum rated current respectively.

Because of the above mentioned motor current limitation, in the first friction heating period Tf, the first drive mechanism GZ1 and the second drive mechanism GZ2 are driven at a flat torque load limited by the current limit value IL1 (constant current of which magnitude is the same as the current limit value IL1). In the second friction heating period Ts in the initial phase (predetermined period from the start of the second friction heating period Ts), the first drive mechanism GZ1 and the second drive mechanism GZ2 are driven at a flat torque load limited by the current limit value IL2 (constant current of which magnitude is the same as the current limit value IL2). Then if the process progresses normally, the first drive mechanism GZ1 and the second drive mechanism GZ2 are driven at a torque load that is not especially limited (current of which magnitude does not reach the current limit value IL2).

The limit value of the motor current here is merely an example, and is set appropriately in terms of suppressing the occurrence of failure and joint defects mentioned above. The current limit values of the first motor MZ1 and the second motor MZ2 may be set to a same value, or to values that are different from each other.

In the initial phase of the friction heating step (first friction heating period Tf), the first workpiece W1 and the second workpiece W2 come in contact at a limited torque load so that an excessive torque load is not generated, and the first workpiece W1 and the second workpiece W2 starts sliding. Then in a state where the heating of the sliding portion is progressed to a certain degree (second friction heating period Ts), the torque limitation is relaxed. In other words, in the initial phase of the step, the workpieces W1 and W2 come in contact at a weak torque, so as to prevent the generation of unstable behavior unique to the initial phase of the step. Then after the sliding state is stabilized, the limitation of the torque load is relaxed and heating joining is promoted. Thereby the occurrence of the workpieces W2 on the second spindle 201 (rear face spindle side) rotate-following the workpiece W1, the generation of joint defects, and the like, can be suppressed.

In the present embodiment, the motor current at a timing when the friction heating step is switched to the upset step is detected, whereby whether or not a droop generated in the friction heating step remains, is detected. In the present embodiment, the first ammeter 410 and the second ammeter 420 used as current detection means also function as droop detection means. In the case where droop remains, the ammeters determine that some abnormality occurred in the friction heating step, notifies the user of the abnormality state, and stops the subsequent steps.

Fig. 5 is a time chart indicating a temporal change of droop (difference between the positional command amount of the spindle and actual moving amount of the spindle) with respect to the relative positions of the first spindle 101 and the second spindle 201 in the Z axis direction in the friction heating step, and is a detection result in the friction joining operation of the present invention indicated in Fig. 5. In Fig. 6, the droop of the first drive mechanism GZ1 is indicated by a gray solid line, and the droop of the second drive mechanism GZ2 is indicated by a black solid line.

In the friction heating step, the droop with respect to the relative positions of the first spindle 101 and the second spindle 201 in the Z axis direction gradually accumulates by the load generated in the sliding portion of the workpieces W1 and W2, but is cleared when the sliding portion is sufficiently softened. Therefore as indicated in Fig. 5, if the friction heating step ends normally by control of the present embodiment, without generating any joint abnormalities, the droop is ultimately eliminated. More specifically, the droop is eliminated by the torque fluctuating portion SS indicated in Fig. 4. This elimination of droop is also expressed as the portion where the current value drops (P5) in the previous stage of the torque fluctuating portion SS in the current fluctuation indicated in Fig. 4. In other words, the load state is instantaneously resolved by sufficient softening of the joined portion, and the motor current drops thereby. Because of such behavior, the positional command amount of the spindle and the actual movement amount of the spindle ultimately match.

Therefore in the present embodiment, if the droop of the first drive mechanism GZ1 and the droop of the second drive mechanism GZ2 remain at more than a predetermined threshold at the timing when the relative rotation of the spindles 101 and 201 stops (timing t2), it is determined that the friction joining step is not functioning correctly.

The flow of the friction joining step of the present embodiment will be described with reference to Fig. 6. Fig. 6 is a flow chart of the friction joining step of the present embodiment. Each control described hereinbelow is executed mainly by the control unit 4.

The control unit 4 starts the rotation of the first spindle 101 using the rotational drive mechanism (S101), and when this rotation is stabilized (S102), the control unit 4 starts moving the first head stock 102 and the second head stock 202 in the Z direction using the drive mechanisms GZ1 and GZ2 (S103). Here the control unit 4 sets the current limit value IL1, of the motors MZ1 and MZ2 of the drive mechanisms GZ1 and GZ2, to the first limit value respectively. The control unit 4 also drives the motors MZ1 and MZ2, setting the control target value (first control target value) of the feed amount of the first head stock 102 (moving amount in the Z direction per unit time), as the first feed amount (first moving amount), and the control target value (second control target value) of the feed amount of the second head stock 202 as the second feed amount (second moving amount). By the respective driving of the drive mechanisms GZ1, GZ2 and the rotational drive mechanism, the front end faces of the workpieces W1 and W2, gripped by each spindle 101 and 201, are pressed and slide with each other.

Here the first feed amount and the second feed amount may be the same amount or different amounts, or may be appropriately set depending on the specification of the spindle mechanism, type of workpiece, and the like.

In the first friction heating period Tf, the control unit 4 continues the friction heating based on the torque limit at the first limit value (S104). The end of the first friction heating period Tf can be determined by the elapsed time from the start of the movement of the first head stock 102 and the second head stock 202 in the Z axis direction, to the end of the predetermined time of the first friction heating period Tf. Or the end of the first friction heating period can be determined based on that the control amount (positional command amount) of the movement of the first head stock 102 and the second head stock 202 in the Z axis direction by each drive mechanism GZ1 and GZ2 has reached the control amount corresponding to the end time of the first friction heating period Tf.

When the first friction heating period Tf ends and the second friction heating period Ts starts, the control unit 4 changes the respective current limit values of the motors MZ1 and MZ2 of the drive mechanisms GZ1 and GZ2 from the first limit values to the above mentioned second limit values respectively (S105). Here the control unit 4 drives the motors MZ1 and MZ2 respectively, regarding the control target value of the feed amount of the first head stock 102 as the third feed amount (third moving amount), and the control target value of the feed amount of the second head stock 202 as the fourth feed amount (fourth moving amount).

Here the third feed amount and the fourth feed amount may be the same amount or different amounts, or may be appropriately set depending on the specification of the spindle mechanism, the type of workpiece, and the like.

The third feed amount and the first feed amount may be a same amount or different amounts. Typically the third feed amount is set to an amount larger than the first feed amount, but may be continuously set to a same amount as the first feed amount, or may be set to an amount smaller than the first feed amount, depending on the joining conditions. In the same manner, the fourth feed amount and the second feed amount may be a same amount or different amounts. Typically the fourth feed amount is set to an amount larger than the second feed amount, but may be continuously set to a same amount as the second feed amount, or may be set as an amount smaller than the second feed amount.

In the second friction heating period Ts, the control unit 4 continues the friction heating based on the torque limit at the second limit value (S106). Once the sliding portion of the two workpieces is sufficiently softened by the friction heat, the control unit 4 controls the rotational drive mechanisms so as to stop the relative rotation of the two workpieces, and ends the second friction heating period Ts (S107). The second friction heating period Ts is ended based on the control of the rotation stop timing of the first spindle 101 mentioned above. At this time, it is determined whether or not the droop at the rotation stop is within a predetermined threshold range (S108).

Whether droop remains at the rotation stop may be determined by detecting, for example, whether or not the droop is less than a predetermined threshold in a predetermined period before and after the timing t2. For the predetermined threshold, a value of about 2 to 3 may be set if the maximum value of the droop indicated in Fig. 5 is 100. The threshold may be a value of about 5 to 10 depending on the joining conditions. The monitoring for detecting the droop may be performed only during a predetermined period in the latter half of the friction heating step. For example, a droop check timer may be started at the timing when the second friction heating period Ts is started. The threshold is not limited to the above values, and the determination method is also not limited to the above methods.

If it is determined that the motor current at the rotation stop is normal (S108, YES), the control unit 4 continues advancing the upset step (S109). In the upset step, the control unit 4 drives the drive mechanisms GZ1 and GZ2 so as to push the workpiece W1 and the workpiece W2 against each other at a pressure higher than in the friction heating step, in the state where the rotations of the workpiece W1 and the workpiece W2 are stopped.

The control unit 4 drives the motors MZ1 and MZ2 respectively, regarding the control target value of the feed amount of the first head stock 102 as the fifth feed amount (fifth moving amount), and regarding the control target value of the feed amount of the second head stock 202 as the sixth feed amount (sixth moving amount).

Here the fifth feed amount and the sixth feed amount may be a same amount or different amounts, or may be appropriately set depending on the specification of the spindle mechanism, the type of workpiece, and the like. Typically the fifth feed amount is set to an amount larger than the third feed amount, but may continuously be set to a same amount as the third feed amount depending on the joining conditions. In the same manner, typically the sixth feed amount may be set to an amount larger than the fourth feed amount, but may continuously be set to a same amount as the fourth feed amount depending on the joining conditions.

If it is determined that the droop at the rotation stop is not the threshold or less (S108, NO), on the other hand, the control unit 4 interprets this that a joint defect is generated in the workpieces W1 and W2, or a failure occurred in the apparatus, and notifies the user that an abnormality exists by emitting an alert or the like (S110).

As described above, according to the control in the friction joining step of the present embodiment, the sliding contact of the workpieces is started at a torque load which is controlled to a level to not cause a workpiece to rotate following the other workpiece, as mentioned above, and the torque limit is relaxed after the sliding state is stabilized. Thereby the occurrence of failure in friction joining, particularly the occurrence of failure in the early stage of the friction heating step can be effectively suppressed. Further, by checking whether the droop remains when the friction heating step ends, the failure which occurred without being prevented by the torque load limit control can be detected. In other words, the quality of the joined state can be accurately determined.

In the present embodiment, the apparatus configuration when the machine tool (cutting process apparatus) is applied to the friction joining apparatus was described, but the present invention may be applied to a dedicated friction joining apparatus.

### [Reference Signs List]

- 1: Machine tool
- 100: First spindle mechanism
- 101: First spindle
- 102: First head stock
- 200: Second spindle mechanism
- 201: Second spindle
- 202: Second head stock
- GZ1: First drive mechanism
- GZ2: Second drive mechanism
- MZ1: First motor
- MZ2: Second motor
- 4: Control unit
- 410: First ammeter
- 420: Second ammeter
- 411: First current limiter
- 421: Second current limiter
- W1: First workpiece
- W2: Second workpiece

## Claims

1. A friction joining device comprising:
a first spindle which grips a first workpiece;
a second spindle which grips a second workpiece so as to face the first workpiece in an axial direction;
a first drive mechanism which includes a first drive source and is configured to move the first spindle in the axial direction by using a drive force of the first drive source;
a second drive mechanism which includes a second drive source and is configured to move the second spindle in the axial direction by using a drive force of the second drive source;
a rotational drive mechanism configured to relatively rotate the first workpiece and the second workpiece around a rotation axis line along the axial direction;
control means for controlling the first drive mechanism, the second drive mechanism and the rotational drive mechanism so that the first workpiece and the second workpiece are joined by contacting with each other in a state where the first workpiece and the second workpiece are relatively rotated; and
current limiting means for limiting current flowing to the first drive source and the second drive source to predetermined limit values or less, wherein
in a first friction heating period that is a predetermined period immediately after the first workpiece and the second workpiece come in contact with each other, the current limiting means limits the current that flows to the first drive source and the second drive source to a first limit value or less that is smaller than a second limit value for limiting the current flowing to the first drive source and the second drive source in a second friction heating period after the first friction heating period has elapsed.

2. The friction joining device according to claim 1, wherein
in the first friction heating period, the control means controls the first drive source by using a first control target value of a moving amount per unit time of the first workpiece as a first moving amount, and controls the second drive source by using a second control target value of a moving amount per unit time of the second workpiece as a second moving amount, and
in the second friction heating period, the control means controls the first drive source by using the first control target value as a third moving amount, and controls the second drive source by using the second control target value as a fourth moving amount.

3. The friction joining device according to claim 2, wherein
the third moving amount is an amount the same as the first moving amount or larger than the first moving amount, and
the fourth moving amount is an amount the same as the second moving amount or larger than the second moving amount.

4. The friction joining device according to claim 2, wherein
the control means stops the second friction heating period by controlling the rotational drive mechanism so as to stop the relative rotation of the first workpiece and the second workpiece, and
in a joining step after the second frictional heating period ends, the control means controls the first drive source by using the first control target value as a fifth moving amount, and controls the second drive source by using the second control target value as a sixth moving amount.

5. The friction joining device according to claim 4, further comprising a droop detection means for detecting a droop of the first drive source and a droop of the second drive source, wherein
in a case where the droop of the first drive source and the droop of the second drive source, generated in a case of stopping the relative rotation, exceed predetermined thresholds respectively, the control means stops the first drive mechanism and the second drive mechanism, and does not execute the joining step.

6. The friction joining device according to claim 1, wherein
the rotational drive mechanism rotates the first workpiece and does not rotate the second workpiece.

7. The friction joining device according to claim 1, wherein
the current flowing to the first drive source and the second drive source becomes constant at a magnitude the same as the first limit value in the first friction heating period.

8. The friction joining device according to claim 1, wherein
the current flowing to the first drive source and the second drive source becomes constant at a magnitude the same as the second limit value in a predetermined period from the start of the second friction heating period, and does not reach the magnitude the same as the second limit value after the predetermined period.
